# EUROPEAN PATENT APPLICATION

(11) **EP 4 579 874 A1**
(43) Date of publication of application: **02.07.2025**
(21) Application number: 22961612.3
(22) Date of filing: 09.10.2022
(51) Int. Cl.: H01M 10/61, H01M 50/251

(54) **BATTERY PACK**

(71) Applicant: Ningde Amperex Technology Limited, Ningde, Fujian 352100 (CN); Xiamen Ampack Technology Limited, Xiamen City, Fujian Province, 361000 (CN)
(72) Inventor: JIN, Chenfei, Ningde, Fujian 352100 (CN); DENG, Changshui, Ningde, Fujian 352100 (CN)
(74) Representative: Icosa
(86) International application number: PCT/CN2022/124080
(87) International publication number: WO 2024/077414

(57) **Abstract**

Some embodiments of this application provide a battery pack. The battery pack includes a first casing, a battery module, and a second casing. The first casing has a first opening. The battery module is accommodated in the first casing. The second casing is connected to the first casing, the second casing includes a first sub-casing and a second sub-casing, the first sub-casing is connected to the first casing and covers at least a part of the first opening, and the second sub-casing is connected to the first casing. The first sub-casing and/or the second sub-casing is configured to be openable.

## Description

### BACKGROUND

Rechargeable cells are batteries that, after cell discharge, can continuously be used by charging to activate active substances. The rechargeable cells are widely used in electronic devices, such as mobile phones, laptops, or the like.

A battery module typically includes multiple cells to meet voltage requirements of the electronic device. The battery releases heat during operation. How to improve heat dissipation of battery modules and charge and discharge performance of the battery modules has been the research direction in the industry.

### SUMMARY

This application provides a battery pack that can improve the heat dissipation efficiency of the battery module and enhance the cycling performance of the battery module.

According to a first aspect, an embodiment of this application provides a battery pack, where the battery pack includes a first casing, a battery module, and a second casing. The first casing has a first opening. The battery module is accommodated in the first casing. The second casing is connected to the first casing, the second casing includes a first sub-casing and a second sub-casing, the first sub-casing is connected to the first casing and covers at least a part of the first opening, the second sub-casing is connected to the first casing, and the first sub-casing and/or the second sub-casing is configured to be openable.

At least one of the first sub-casing and the second sub-casing can be opened, allowing the internal space of the first casing to communicate with the external space of the battery pack via the first opening. The heat generated by the battery module can be dissipated to the outside of the battery pack via the first opening, thereby improving the heat dissipation efficiency of the battery module and the cycling performance of the battery module. During the use of the battery pack, when the battery module fails, at least one of the first sub-casing and the second sub-casing can be opened to maintain the battery module via the first opening, thereby reducing the maintenance time, simplifying the assembly and disassembly process of the battery pack, and improving the efficiency.

In some embodiments, the battery module is disposed opposite to the first sub-casing along a first direction. When the first sub-casing is opened, the heat generated by the battery module can be dissipated to the outside of the battery pack via the first opening, thereby improving the heat dissipation efficiency of the battery module and the cycling performance of the battery module.

In some embodiments, the battery pack further includes a control assembly accommodated in the first casing, and the control assembly is spaced apart from the battery module along a second direction perpendicular to the first direction. The control assembly is disposed opposite to the second sub-casing along the first direction.

Spacing the control assembly apart from the battery module can reduce the heat transferred between the battery module and the control assembly to minimize the thermal effect between the battery module and the control assembly, thus improving the cycling performance of the battery module and the use performance of the control assembly.

In some embodiments, the first opening includes a first region and a second region, the first sub-casing covers at least a part of the first region, and the second sub-casing covers at least a part of the second region.

The second sub-casing can be opened, and the heat generated by the control assembly can be dissipated to the outside of the battery pack through the second region, thereby improving the heat dissipation efficiency of the control assembly and improving the use performance of the control assembly. During the use of the battery pack, when the control assembly fails, the second sub-casing can be opened to maintain the control assembly through the second region, reducing the maintenance time, simplifying the assembly and disassembly process of the battery pack, and improving the efficiency.

In some embodiments, the first casing includes a partition portion, and the partition portion separates the first opening into the first region and the second region. The partition portion can support the part of the first casing enclosing the first opening, reducing deformation of the first opening, thereby enhancing the stability and safety of the battery pack.

In some embodiments, the control assembly includes a circuit board, a control component, and a heat conducting plate, the circuit board includes a first surface and a second surface opposite to each other along a third direction, and the third direction is perpendicular to the first direction and the second direction. The second surface is connected to the first casing, and the control component and the heat conducting plate are disposed on the first surface.

During the operation of the battery pack, the heat conducting plate can conduct the heat generated by the circuit board and the heat generated by the control component to dissipate the heat outwards, reducing the temperature of the circuit board and the control component, and lowering the risk of failure of the circuit board and the control component.

In some embodiments, the control component includes a control chip. Along the first direction, the control chip is located between the battery module and the heat conducting plate, helping to improve the heat dissipation of the battery pack.

In some embodiments, viewed along the first direction, the heat conducting plate is higher than the control component in the third direction. The heat conducting plate is higher than the control component in the third direction, increasing the heat dissipation area of the heat conducting plate and improving the heat dissipation efficiency of the heat conducting plate.

In some embodiments, the battery pack further includes a heat dissipation component disposed on the first casing, where the heat dissipation component is opposite to at least a part of the heat conducting plate along the first direction. The heat dissipation component can be configured to dissipate the heat on the heat conducting plate to the outside of the battery pack. The heat dissipation component being opposite to at least a part of the heat conducting plate can improve the heat dissipation efficiency.

In some embodiments, the control component includes a capacitor, and the heat dissipation component is opposite to at least a part of the capacitor along the first direction. The heat dissipation component can be configured to dissipate the heat on the capacitor to the outside of the battery pack. The heat dissipation component being opposite to at least a part of the capacitor can improve the heat dissipation efficiency.

In some embodiments, the heat conducting plate includes a first heat conducting plate and a second heat conducting plate spaced apart along the second direction. Viewed along the third direction, the capacitor is located between the first heat conducting plate and the second heat conducting plate along the second direction.

The first heat conducting plate and the second heat conducting plate can block the capacitor from both sides to reduce the heat dissipated from the capacitor to the surroundings, thereby reducing the thermal effect of the capacitor on other components. The airflow passing through the space between the first heat conducting plate and the second heat conducting plate can carry away the heat generated by the capacitor, thereby reducing the temperature of the capacitor and improving the operation performance of the capacitor.

In some embodiments, the control component includes a control chip. Viewed along the third direction, the second heat conducting plate is located between the control chip and the capacitor in the second direction. The second heat conducting plate can separate the control chip and the capacitor, reducing the heat conducted from the capacitor to the control chip and lowering the temperature of the control chip, thus improving the performance of the control chip and prolonging its service life.

In some embodiments, the second sub-casing is opposite to the heat dissipation component along the first direction. The second sub-casing is provided with multiple through holes, and at least some of the multiple through holes are opposite to the heat dissipation component along the first direction. The heat dissipation component dissipates the internal heat of the battery pack to the outside of the battery pack via the multiple through holes to improve heat dissipation efficiency.

In some embodiments, viewed along the first direction, the battery module is higher than the heat conducting plate in the third direction.

In some embodiments, the battery pack further includes a protruding wall, where the protruding wall is disposed between the battery module and the control assembly. The protruding wall can isolate the heat generated by the control assembly, reducing the thermal effect on the battery module, lowering the risk of thermal runaway of the battery module, and improving the safety.

In some embodiments, the battery pack further includes a first component disposed on the first casing, and the control assembly is connected to the first component via a cable. The control assembly can transmit a signal to the first component via the cable, enabling the first component to perform a predetermined function.

In some embodiments, the second casing further includes a third sub-casing, and the third sub-casing is connected to the first sub-casing and the second sub-casing. In the first direction, the third sub-casing covers at least a part of the first component. The third sub-casing serves to protect the first component, reducing the risk of damage to the first component when the battery pack is subjected to external impact.

In some embodiments, the first sub-casing is provided with a first fitting portion, the second sub-casing is provided with a second fitting portion, the first fitting portion is configured to be movable from a first position of the second fitting portion to a second position, the first fitting portion is snap-fitted with the second sub-casing at the first position, and the first fitting portion is rotatably connected to the second sub-casing at the second position.

In some embodiments, the first position and the second position are disposed along a second direction. The first sub-casing includes a first portion, the second sub-casing includes a second portion, the first portion and the second portion are arranged along the second direction, and the first fitting portion and the second fitting portion are located between the first portion and the second portion in the second direction.

In some embodiments, the second casing further includes a third sub-casing, and at least a part of the third sub-casing is located between the first portion and the second portion and abuts against the first portion and the second portion.

In some embodiments, in the second direction, a surface of the first portion facing the second portion is provided with a first recess, and a surface of the second portion facing the first portion is provided with a second recess. A first latch and a second latch are respectively disposed at two ends of the third sub-casing along the second direction, the first latch is inserted into the first recess, and the second latch is inserted into the second recess.

In some embodiments, the battery pack further includes a first plate, where the first plate is located on a side of the first portion facing the first casing and is connected to the first casing, and the first plate covers at least a part of the first opening. The first plate is provided with a second opening, the first sub-casing includes a third latch, the third latch is disposed on an end surface of the first portion facing the first casing, and the third latch passes through the second opening. The third latch is snap-fitted with the first plate when the first fitting portion is located at the first position, and the third latch is released from the first plate when the first fitting portion is located at the second position.

In some embodiments, the first plate is provided with a third opening, the battery pack further includes a second component, and the second component passes through the third opening to be electrically connected to the battery module. A side of the first portion facing the first plate is provided with a third recess, and at least a part of the second component is accommodated in the third recess.

In some embodiments, the first sub-casing includes a third portion connected to the first portion, and the third portion is located between the first portion and the second portion along the second direction. The first fitting portion is disposed at the third portion.

In some embodiments, a side of the third portion facing the first casing is provided with a first hole, and the first plate is provided with a first protrusion inserted into the first hole. The first hole includes a first hole portion and a second hole portion communicating with each other, and a hole size of the second hole portion is larger than a hole size of the first hole portion. The first protrusion is inserted into the first hole portion when the first fitting portion is located at the first position, and the first protrusion is inserted into the second hole portion when the first fitting portion is located at the second position.

In some embodiments, the third portion is provided with a second hole. The battery pack further includes a first component, the second casing includes a third sub-casing, at least a part of the first component is accommodated in the second hole, and at least a part of the third sub-casing is located between the first portion and the second portion and covers at least a part of the first component.

In some embodiments, the first component includes a display screen.

In some embodiments, the second sub-casing includes a second protrusion, the second protrusion protrudes out of a surface of the second portion facing the first portion along the second direction, and the second fitting portion is disposed at the second protrusion. The first sub-casing further includes a fourth portion, the fourth portion is connected to the first portion and opposite to the second protrusion along a third direction, and the third direction is perpendicular to the second direction. The first fitting portion protrudes out of a surface of the fourth portion facing the second protrusion along the third direction and is inserted into the second fitting portion.

In some embodiments, the second fitting portion has a third hole, a size of the third hole at the second position along the third direction is larger than a size of the third hole at the first position along the third direction, and the third direction is perpendicular to the second direction and the third direction.

In some embodiments, two second protrusions and two fourth portions are provided, the two second protrusions are spaced apart along the third direction, and the two fourth portions are located between the two second protrusions.

In some embodiments, the second portion covers at least a part of the first opening.

In some embodiments, the battery pack further includes a second plate, where the second plate is located on a side of the second portion facing the first casing and is connected to the first casing, and the second plate covers at least a part of the first opening. The second plate and the second portion are arranged along a third direction. The second plate is provided with a fourth opening, the second sub-casing includes a fourth latch, the fourth latch is disposed on an end surface of the second portion facing the first casing, and the fourth latch passes through the fourth opening. The fourth latch is snap-fitted with the second plate when the first fitting portion is located at the first position, and the fourth latch is released from the second plate when the first fitting portion is located at the second position.

In some embodiments, the battery pack further includes a heat dissipation component, where at least a part of the heat dissipation component is accommodated in the first casing. The second plate is provided with a fifth opening, the heat dissipation component is opposite to the fifth opening along the third direction, and the second portion covers the fifth opening.

### BRIEF DESCRIPTION OF DRAWINGS

The following describes features, advantages, and technical effects of some example embodiments of this application with reference to the accompanying drawings.
FIG. 1 is a schematic structural diagram of a battery pack according to an embodiment of this application;
FIG. 2 is another schematic structural diagram of the battery pack shown in FIG. 1, with a cover plate omitted;
FIG. 3 is a schematic top view of the battery pack shown in FIG. 2;
FIG. 4 is a schematic exploded view of the battery pack shown in FIG. 2;
FIG. 5 is a schematic enlarged view at block A in FIG. 2;
FIG. 6 is a schematic cross-sectional view of a battery pack according to an embodiment of this application;
FIG. 7 is a schematic structural diagram of the battery pack shown in FIG. 2 when a first sub-casing is opened;
FIG. 8 is a schematic structural diagram of the battery pack shown in FIG. 2 when a second sub-casing is opened;
FIG. 9 is a schematic structural diagram of a second casing shown in FIG. 2;
FIG. 10 is a schematic exploded view of the second casing shown in FIG. 9;
FIG. 11 is a schematic diagram of the first sub-casing and the second sub-casing shown in FIG. 10 from another angle;
FIG. 12 is a schematic enlarged view at circle B in FIG. 11;
FIG. 13 is a schematic structural diagram of a first plate of a battery pack according to an embodiment of this application;
FIG. 14 is a schematic enlarged view diagram at circle C in FIG. 11;
FIG. 15 is a schematic structural diagram of the first sub-casing shown in FIG. 11;
FIG. 16 is a schematic structural diagram of the second sub-casing shown in FIG. 11;
FIG. 17 is a schematic structural diagram of a second plate of a battery pack according to an embodiment of this application;
FIG. 18 is another schematic diagram of the first sub-casing and the second sub-casing shown in FIG. 11; and
FIG. 19 is a schematic exploded view of a battery pack according to another embodiment of this application.

In the accompanying drawings, the figures are not necessarily drawn to scale.

Numeral references: 1. first casing; 11. first opening; 111. first region; 112. second region; 12. first wall; 13. casing opening; 14. partition portion; 15. second wall; 16. third wall; 17. fourth wall; 18. fifth wall; 2. battery module; 3. second casing;
31. first sub-casing; 311. first fitting portion; 312. first portion; 312a. first recess; 312b. third recess; 313. third latch; 314. third portion; 3141. first hole; 3141a. first hole portion; 3141b. second hole portion; 3142. second hole; 315. fourth portion;
32. second sub-casing; 321. second fitting portion; 321a. third hole; 322. second portion; 322a. second recess; 323. second protrusion; 324. fourth latch; 325. through hole;
33. third sub-casing; 331. first latch; 332. second latch;
4. first plate; 41. second opening; 42. third opening; 43. first protrusion;
5. second component; 6. first component; 7. second plate; 71. fourth opening; 72. fifth opening; 8. heat dissipation component; 9. control assembly; 91. protruding wall; 92. circuit board; 921. first surface; 922. second surface; 93. control component; 931. capacitor; 932. inductor; 933. control chip; 94. heat conducting plate; 94a. first heat conducting plate; 94b. second heat conducting plate; 94c. third heat conducting plate; 95. thermal conductive adhesive;
Z. first direction; X. second direction; and Y. third direction.

### DETAILED DESCRIPTION OF EMBODIMENTS

To make the objectives, technical solutions, and advantages of some embodiments of this application clearer, the following clearly describes the technical solutions in these embodiments of this application with reference to the accompanying drawings in these embodiments of this application. Apparently, these described embodiments are some but not all of embodiments of this application.

In the specification, claims, or accompanying drawings of this application, the terms "first", "second", and the like are intended to distinguish between different objects rather than to indicate a particular sequence or relative importance. In these embodiments of this application, the same reference signs denote the same members. For brevity, in different embodiments, detailed descriptions of the same members are not repeated.

Reference to "embodiment" in this application means that specific features, structures, or characteristics described with reference to the embodiment may be included in at least one embodiment of this application. The word "embodiment" appearing in various places in this specification does not necessarily refer to the same embodiment or an independent or alternative embodiment that is exclusive of other embodiments.

In the description of this application, it should be noted that unless otherwise specified and defined explicitly, the terms "mounting", "connection", and the like should be understood in their general senses. For example, they may refer to a fixed connection, a detachable connection, or an integral connection, and may refer to a direct connection, an indirect connection via an intermediate medium, or an internal communication between two elements. Persons of ordinary skill in the art can understand specific meanings of these terms in this application as appropriate to specific situations.

The term "parallel" in some embodiments of this application not only includes the absolutely parallel case, but also includes the approximately parallel case in the conventional understanding of engineering; likewise, the term "perpendicular" not only includes the absolutely perpendicular case, but also includes the approximately perpendicular case in the conventional understanding of engineering. For example, two directions may be considered to be perpendicular if an included angle between the two directions is 80°-90°, and two directions may be considered to be parallel if the included angle between the two directions is 0°-10°.

The battery module of this application is described below with reference to the accompanying drawings.

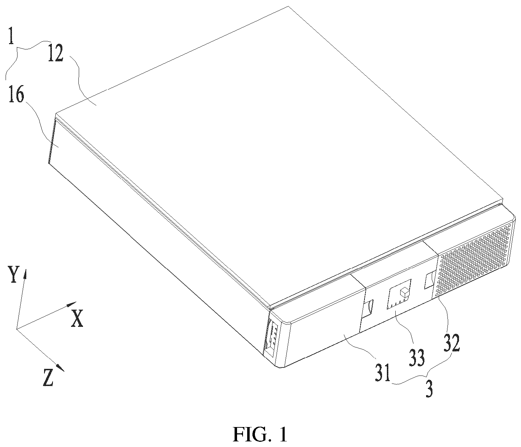

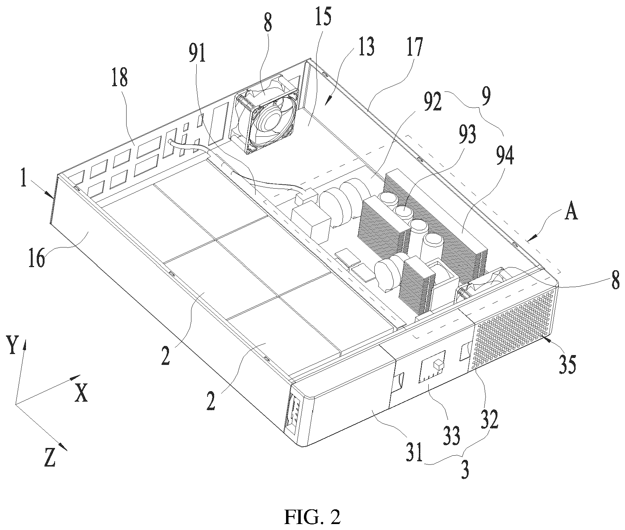

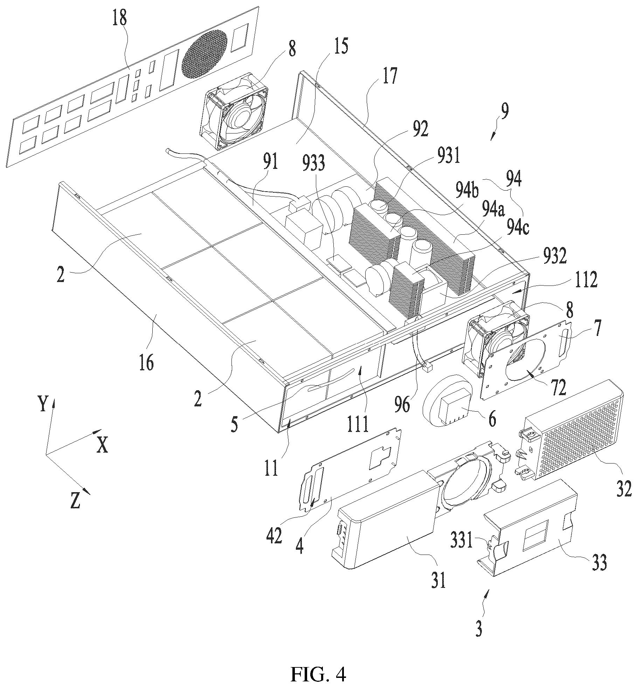

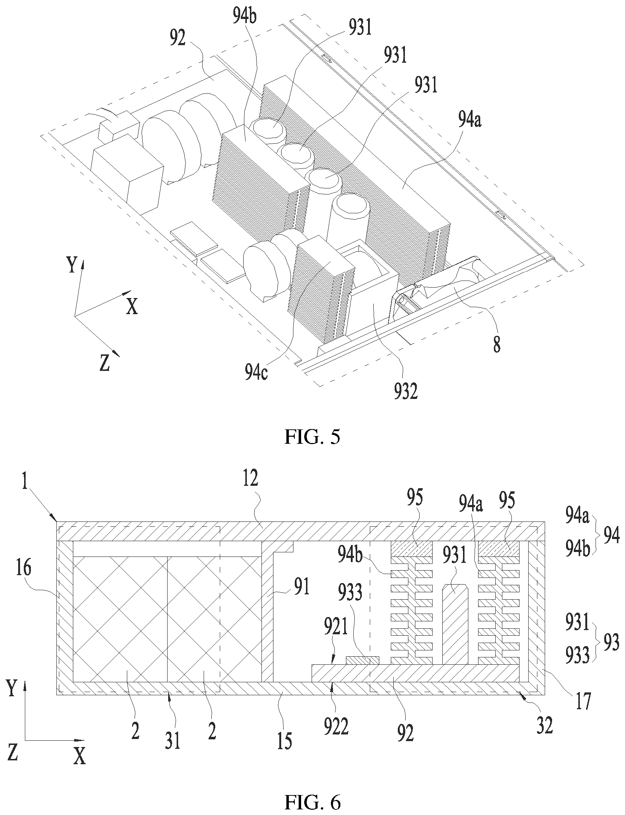

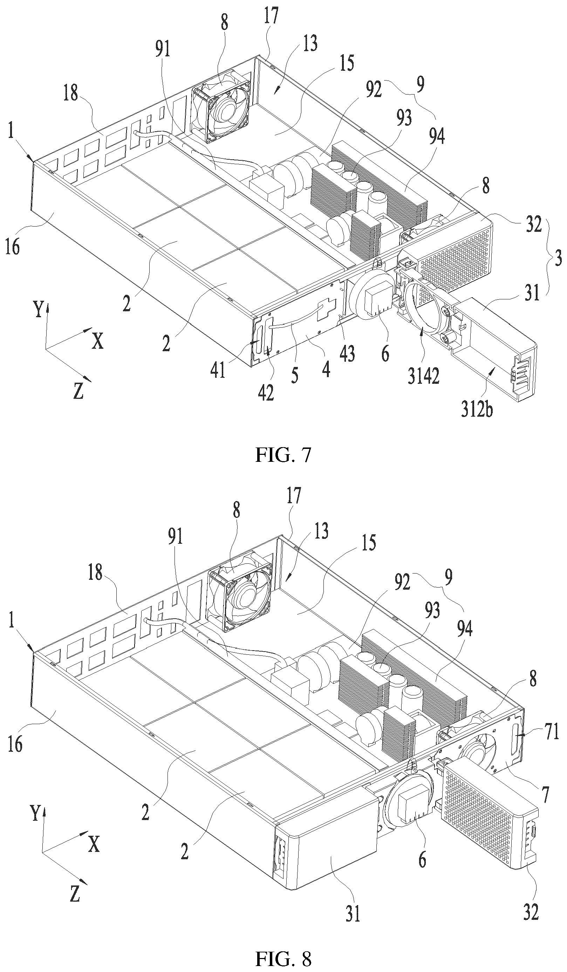

According to FIGs. 1 to 8, a battery pack of these embodiments of this application includes a first casing 1, a battery module 2, and a second casing 3. The first casing 1 has a first opening 11. The battery module 2 is accommodated in the first casing 1. The second casing 3 is connected to the first casing 1, the second casing 3 includes a first sub-casing 31 and a second sub-casing 32, the first sub-casing 31 is connected to the first casing 1 and covers at least a part of the first opening 11, the second sub-casing 32 is connected to the first casing 1, and the first sub-casing 31 and/or the second sub-casing 32 is configured to be openable.

In some embodiments, at least one of the first sub-casing 31 and the second sub-casing 32 can be opened, allowing the internal space of the first casing 1 to communicate with the external space of the battery pack via the first opening 11. The heat generated by the battery module 2 can be dissipated to the outside of the battery pack via the first opening 11, thereby improving the heat dissipation efficiency of the battery module 2 and the cycling performance of the battery module 2. During the use of the battery pack, when the battery module 2 fails, at least one of the first sub-casing 31 and the second sub-casing 32 can be opened to maintain the battery module 2 via the first opening 11, reducing the maintenance time, simplifying the assembly and disassembly process of the battery pack, and improving the efficiency.

In some embodiments, the first sub-casing 31 is configured to be openable.

In some embodiments, the second sub-casing 32 covers at least a part of the first opening 11, and the second sub-casing 32 is configured to be openable.

In some embodiments, there may be one or more battery modules 2. Optionally, multiple battery modules 2 are provided.

The battery module 2 includes multiple cells, and the multiple cells may be connected in series, in parallel, or in a combination of series and parallel, where being connected in series-parallel means a combination of series and parallel connections of the multiple cells.

The cells may be lithium-ion cells, sodium-lithium-ion cells, sodium-ion cells, magnesium-ion cells, or other types of cells, which is not limited in these embodiments of this application. Optionally, the cells are pouch cells.

In some embodiments, the first casing 1 includes a first wall 12, a second wall 15, a third wall 16, a fourth wall 17, and a fifth wall 18. The first wall 12, second wall 15, third wall 16, and fourth wall 17 enclose the first opening 11. The fifth wall 18 is opposite to the first opening 11 in the first direction Z. The third wall 16 is opposite to the fourth wall 17 along the second direction X, and the first wall 12 is opposite to the second wall 15 along the third direction Y. For example, the first direction Z, the second direction X, and the third direction Y are perpendicular to each other.

In some embodiments, the second wall 15, the third wall 16, and the fourth wall 17 are connected to form a U-shaped frame structure. The frame structure forms a casing opening 13 opposite to the second wall 15 in the third direction Y. The first wall 12 covers the casing opening 13.

In some embodiments, the battery pack further includes a first plate 4 and a second plate 7. The first plate 4 is connected to the first wall 12, the second wall 15, and the third wall 16, and the first plate 4 covers part of the first opening 11. The second plate 7 is connected to the first wall 12, the second wall 15, and the fourth wall 17. The second plate 7 is spaced apart from the first plate 4 and covers part of the first opening 11.

In some embodiments, the first wall 12 may be connected to the frame structure by adhering, snap-fitting, welding, or other methods to cover the casing opening 13.

In some embodiments, the battery module 2 is arranged on the second wall 15. For example, the battery module 2 is adhered to the surface of the second wall 15 opposite to the casing opening 13 using an adhesive.

In some embodiments, the first sub-casing 31 is connected to the first plate 4.

In some embodiments, the first sub-casing 31 covers part of the first opening 11.

In some embodiments, the battery module 2 is disposed opposite to the first sub-casing 31 along a first direction Z. When the first sub-casing 31 is opened, the heat generated by the battery module 2 can be dissipated to the outside of the battery pack via the first opening 11, thereby improving the heat dissipation efficiency of the battery module 2 and enhancing the cycling performance of the battery module 2.

In some embodiments, the battery pack further includes a control assembly 9 accommodated in the first casing 1, and the control assembly 9 is spaced apart from the battery module 2 along a second direction X perpendicular to the first direction Z. The control assembly 9 is disposed opposite to the second sub-casing 32 along the first direction Z.

In some embodiments, the control assembly 9 is arranged on the second wall 15, for example, fixed to the second wall 15 by screws or other fasteners.

Viewed along the first direction Z, the battery module 2 overlaps the first sub-casing 31, and the control assembly 9 overlaps the second sub-casing 32.

Spacing the control assembly 9 apart from the battery module 2 can reduce the heat transferred between the battery module 2 and the control assembly 9, minimizing the thermal effect between the battery module 2 and the control assembly 9, thus improving the cycling performance of the battery module 2 and the use performance of the control assembly 9.

In some embodiments, the first opening 11 includes a first region 111 and a second region 112, the first sub-casing 31 covers at least a part of the first region 111, and the second sub-casing 32 covers at least a part of the second region 112. For example, the second sub-casing 32 is configured to be openable.

The first region 111 and the second region 112 can be connected or separated.

The second sub-casing 32 can be opened, and the heat generated by the control assembly 9 can be dissipated to the outside of the battery pack through the second region 112, thereby improving the heat dissipation efficiency of the control assembly 9 and improving the use performance of the control assembly 9. During the use of the battery pack, when the control assembly 9 fails, the second sub-casing 32 can be opened to maintain the control assembly 9 through the second region 112, reducing the maintenance time, simplifying the assembly and disassembly process of the battery pack, and improving the efficiency.

In some embodiments, viewed from the second direction X, the battery module 2 overlaps the control assembly 9. In this embodiment, space is is configured for reduce the distance between the battery module 2 and the control assembly 9, facilitating harness connection.

In some embodiments, in the first direction Z, the battery module 2 is closer to the fifth wall 18 than the control assembly 9. The space between the fifth wall 18 and the control assembly 9 helps to improve heat dissipation, facilitates harness arrangement, reduces interference between harnesses, and lowers the probability of harness failure.

In some embodiments, the control assembly 9 is electrically connected to the battery module 2, enabling the control of charging and discharging of the battery module 2. The control assembly is fixed to the first casing 1. For example, the control assembly 9 is adhered to the second wall 15 of the first casing 1.

In some embodiments, the control assembly 9 includes a circuit board 92, a control component 93, and a heat conducting plate 94, the circuit board 92 includes a first surface 921 and a second surface 922 opposite to each other along a third direction Y, and the third direction Y is perpendicular to the first direction Z and the second direction X. The second surface 922 is connected to the first casing 1, and the control component 93 and the heat conducting plate 94 are disposed on the first surface 921. The first surface 921 faces the first wall 12, and the second surface 922 faces away from the first wall 12.

During the operation of the battery pack, the heat conducting plate 94 can conduct the heat generated by the circuit board 92 and the heat generated by the control component 93 to dissipate the heat outwards, reducing the temperature of the circuit board 92 and the control component 93, and lowering the risk of failure of the circuit board 92 and the control component 93.

In some embodiments, the heat conducting plate 94 includes a material with good thermal conductivity, such as a metal material, where the metal material may be copper, aluminum, steel, or other materials. Optionally, the surface of the heat conducting plate 94 may be coated with an insulating material.

In some embodiments, the heat conducting plate 94 may be an aluminum plate.

In some embodiments, the control component 93 includes a control chip 933. The control chip 933 can be configured for control the working state of the battery module 2. For example, the control chip 933 can be configured for control the charge and discharge of the battery module 2. In some embodiments, along the first direction Z, the control chip 933 is located between the battery module 2 and the heat conducting plate 94, helping to improve the heat dissipation of the battery pack.

For example, the circuit board 92 is of a plate-shaped structure. The first surface 921 and the second surface 922 are planar.

In some embodiments, the circuit board 92 includes a printed circuit board (PCB, Printed Circuit Board).

In some embodiments, viewed along the first direction Z, the heat conducting plate 94 is higher than the control component 93 in the third direction Y. The heat conducting plate 94 is higher than the control component 93 in the third direction Y, increasing the heat dissipation area of the heat conducting plate 94 and improving the heat dissipation efficiency of the heat conducting plate 94.

In some embodiments, the battery pack further includes a heat dissipation component 8 disposed on the first casing 1, where the heat dissipation component 8 is opposite to at least a part of the heat conducting plate 94 along the first direction Z. The heat dissipation component 8 is arranged on the fifth wall 18, for example, fixed to the fifth wall 18 by screws or other fasteners. Along the first direction Z, the projections of the heat dissipation component 8 and the second sub-casing 32 overlap, which helps to improve the heat dissipation of the battery pack. The heat dissipation component 8 can be configured to dissipate the heat on the heat conducting plate 94 to the outside of the battery pack. The heat dissipation component 8 being opposite to at least a part of the heat conducting plate 94 can improve the heat dissipation efficiency.

In some embodiments, the control chip 933 can be configured for control the start and stop of the heat dissipation component 8.

In some embodiments, the heat dissipation component 8 may be mounted on the second plate 7.

In some embodiments, the heat dissipation component 8 includes, but is not limited to, a fan or air conditioner, and the heat dissipation component 8 has a heat dissipation function.

In some embodiments, the heat dissipation component 8 includes two fans. The two fans are mounted on the first casing 1 and are respectively located on both sides of the control assembly 9 along the first direction Z. During the use of the battery pack, one fan draws air into the first casing 1, and the other fan exhausts air out of the first casing 1. The two fans cause airflow to pass through the heat conducting plate 94 of the control assembly 9, thereby dissipating the heat on the heat conducting plate 94 to the outside of the first casing 1.

In some embodiments, the control component 93 includes a capacitor 931, and the heat dissipation component 8 is opposite to at least a part of the capacitor 931 along the first direction Z. There may be one or more capacitors 931. For example, the capacitor 931 can store energy and provide output energy. Optionally, the capacitor 931 can also filter interference and reduce circuit current ripple.

The heat dissipation component 8 can be configured to dissipate the heat on the capacitor 931 to the outside of the battery pack. The heat dissipation component 8 being opposite to at least a part of the capacitor 931 can improve the heat dissipation efficiency.

In some embodiments, the heat conducting plate 94 includes a first heat conducting plate 94a and a second heat conducting plate 94b spaced apart along the second direction X. Viewed along the third direction Y, the capacitor 931 is located between the first heat conducting plate 94a and the second heat conducting plate 94b in the second direction X.

The first heat conducting plate 94a and the second heat conducting plate 94b can block the capacitor 931 from both sides to reduce the heat dissipated from the capacitor 931 to the surroundings, thereby reducing the thermal effect of the capacitor 931 on other components. The airflow passing through the space between the first heat conducting plate 94a and the second heat conducting plate 94b can carry away the heat generated by the capacitor 931, thereby reducing the temperature of the capacitor 931 and improving the operation performance of the capacitor 931.

In some embodiments, the first heat conducting plate 94a is connected to the first wall 12 via a thermal conductive adhesive 95, and the second heat conducting plate 94b is connected to the first wall 12 via the thermal conductive adhesive 95. The heat on the first heat conducting plate 94a and the heat on the second heat conducting plate 94b can be dissipated outward via the first wall 12.

In some embodiments, the second sub-casing 32 is opposite to the heat dissipation component 8 along the first direction Z. The second sub-casing 32 is provided with multiple through holes 325, and at least some of the multiple through holes 325 are opposite to the heat dissipation component 8 along the first direction Z.

The heat dissipation component 8 dissipates the internal heat of the battery pack to the outside of the battery pack via the multiple through holes 325 to improve heat dissipation efficiency.

In some embodiments, the control component 93 also includes an inductor 932. Optionally, the inductor 932 is a power inductor.

In some embodiments, the heat dissipation component 8 is opposite to at least a part of the inductor 932 along the first direction Z.

In some embodiments, the heat conducting plate 94 includes a third heat conducting plate 94c. The third heat conducting plate 94c is connected to the inductor 932. The third heat conducting plate 94c can absorb the heat generated by the inductor 932 and dissipate the heat outward, thereby lowering the temperature of the inductor 932 and improving the use performance of the inductor 932.

In some embodiments, the third heat conducting plate 94c is connected to the first wall 12 via the thermal conductive adhesive 95.

In some embodiments, viewed along the first direction Z, the battery module 2 is higher than the heat conducting plate 94 in the third direction Y.

In some embodiments, viewed along the third direction Y, the second heat conducting plate 94b is located between the control chip 933 and the capacitor 931 in the second direction X.

The second heat conducting plate 94b can separate the control chip 933 and the capacitor 931, reducing the heat conducted from the capacitor 931 to the control chip 933 and lowering the temperature of the control chip 933, thus improving the performance of the control chip 933 and prolonging its service life.

In some embodiments, the battery pack further includes a protruding wall 91, where the protruding wall 91 is disposed between the battery module 2 and the control assembly 9. The protruding wall 91 can isolate the heat generated by the control assembly 9, reducing the thermal effect on the battery module 2, lowering the risk of thermal runaway of the battery module, and improving the safety.

In some embodiments, the protruding wall 91 protrudes out of the second wall 15 and is fixed to the second wall 15.

In some embodiments, in the third direction Y, the height of the protruding wall 91 is less than or equal to the height of the third wall 16, and the height of the protruding wall 91 is less than or equal to the height of the fourth wall 17.

In some embodiments, the protruding wall 91 and the second wall 15 are integrally formed, which helps to enhance the structural strength of the first casing 1. In some embodiments, the protruding wall 91 may be fixed to the second wall 15 by screws or other fasteners.

In some embodiments, multiple cables 96 are provided in the battery pack. In the second direction X, a routing channel is reserved between the control assembly 9 and the battery module 2, and at least some of the cables 96 are arranged in the routing channel. Arranging the routing channel between the control assembly 9 and the battery module 2 facilitates unified mounting and fixing of the multiple cables 96, and can also enlarge the thermal insulation gap between the control assembly 9 and the battery module 2. Some of the cables 96 may be located between the control assembly 9 and the battery module 2 in the second direction X.

In some embodiments, the control assembly 9 and the battery module 2 may be electrically connected via at least one cable 96.

In some embodiments, the battery pack further includes a first component 6 disposed on the first casing 1, and the control assembly 9 is connected to the first component 6 via a cable 96.

The first component 6 is a component of the battery pack is configured for achieve a specific function. For example, the first component 6 includes a display screen.

The control assembly 9 can transmit a signal to the first component 6 via the cable 96, enabling the first component 6 to perform a predetermined function.

In some embodiments, the second casing further includes a third sub-casing 33, and the third sub-casing 33 is connected to the first sub-casing 31 and the second sub-casing 32. In the first direction Z, the third sub-casing 33 covers at least a part of the first component 6. The third sub-casing 33 serves to protect the first component 6, reducing the risk of damage to the first component 6 when the battery pack is subjected to external impact.

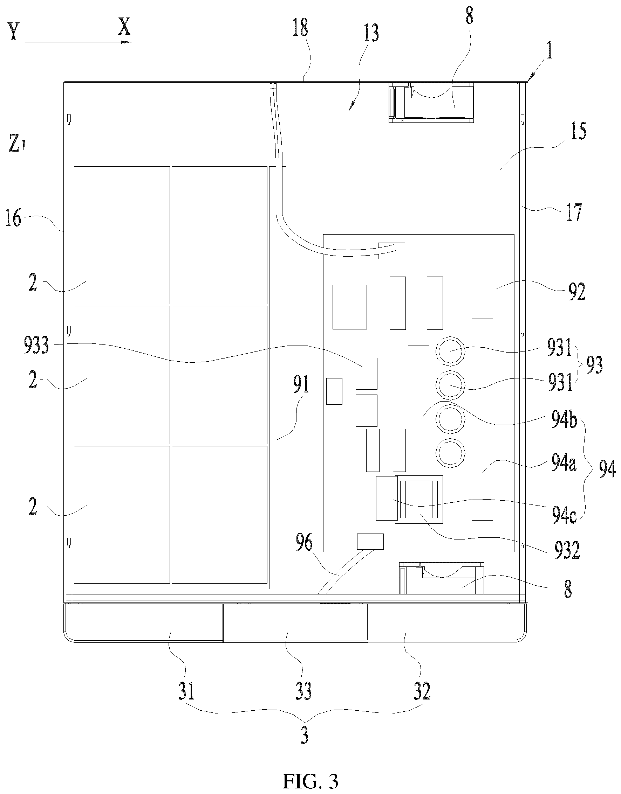

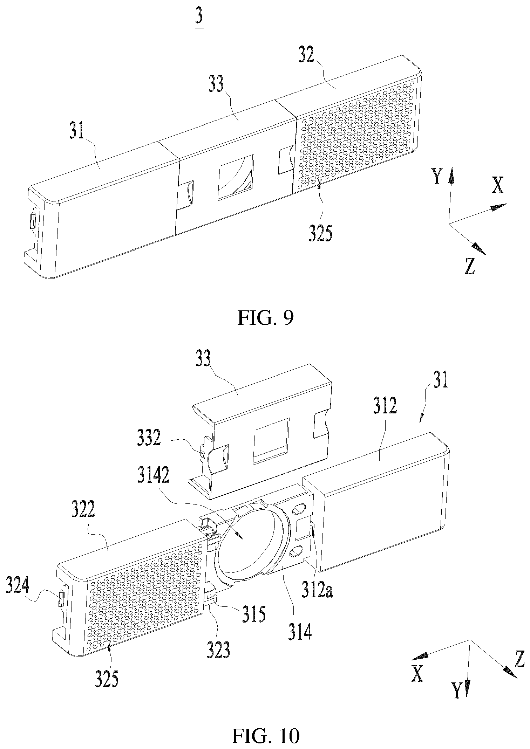

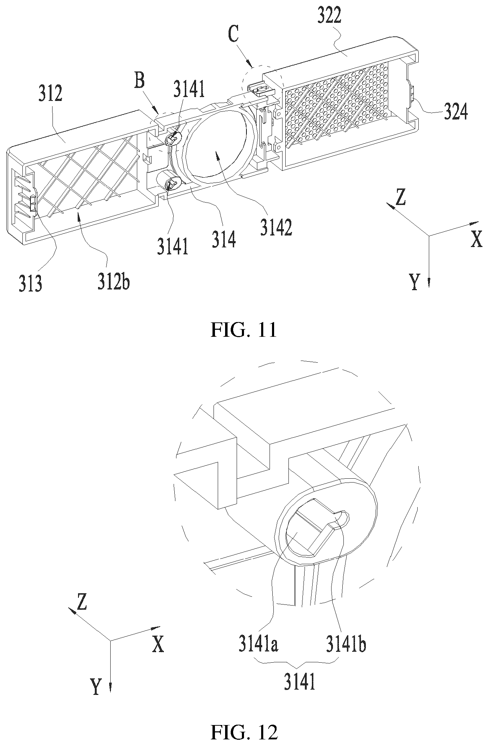

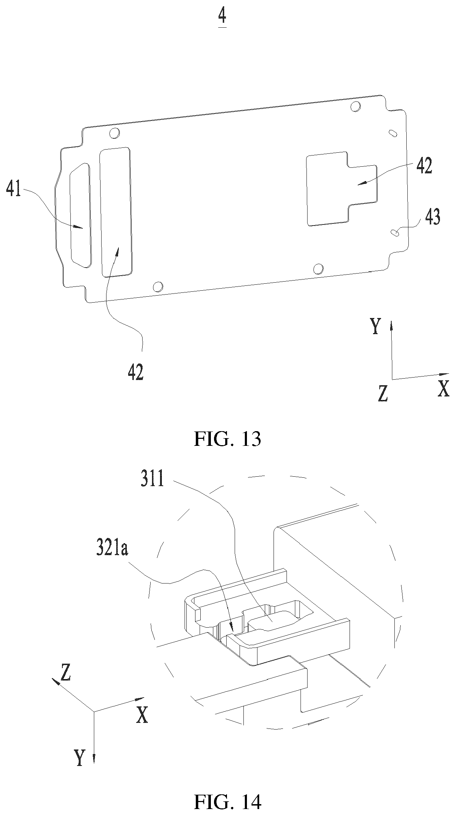

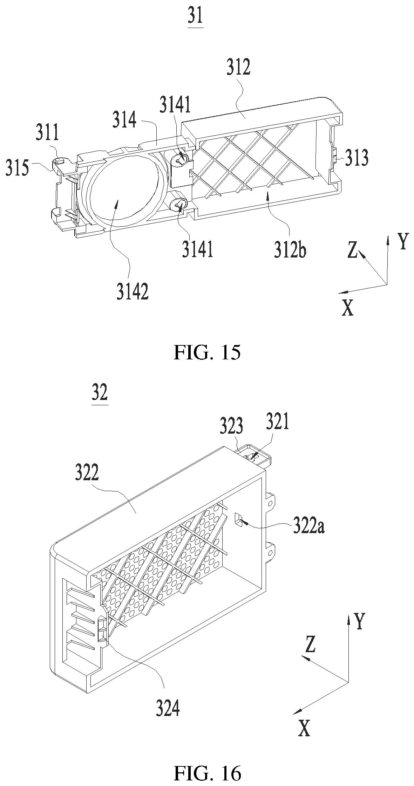

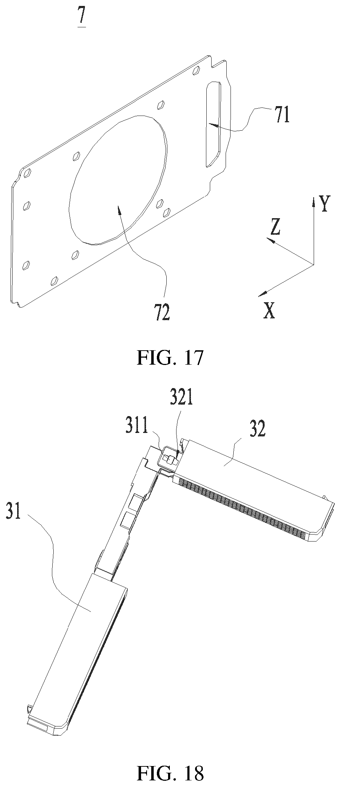

As shown in FIGs. 3, 4, and 9-18, the first sub-casing 31 is provided with a first fitting portion 311, the second sub-casing 32 is provided with a second fitting portion 321, the first fitting portion 311 is configured to be movable from a first position of the second fitting portion 321 to a second position, the first fitting portion 311 is snap-fitted with the second sub-casing 32 at the first position, and the first fitting portion 311 is rotatably connected to the second sub-casing 32 at the second position.

When it is necessary to open the first sub-casing 31, the first sub-casing 31 is moved so that the first fitting portion 311 of the first sub-casing 31 moves to the second position, and then the first sub-casing 31 is rotated to open the first sub-casing 31. When it is necessary to close the first sub-casing 31, the first sub-casing 31 is rotated to a preset angle and then moved from the second position to the first position, so that the first fitting portion 311 is snap-fitted to the second sub-casing 32.

When it is necessary to open the second sub-casing 32, the second sub-casing 32 may be correspondingly moved and rotated so that the first fitting portion 311 moves from the first position of the second fitting portion 321 to the second position.

In some embodiments, the first position and the second position are disposed along a second direction X. The first sub-casing 31 includes a first portion 312, the second sub-casing 32 includes a second portion 322, the first portion 312 and the second portion 322 are arranged along the second direction X, and the first fitting portion 311 and the second fitting portion 321 are located between the first portion 312 and the second portion 322 in the second direction X.

In some embodiments, the second casing 3 further includes a third sub-casing 33, and at least a part of the third sub-casing 33 is located between the first portion 312 and the second portion 322 and abuts against the first portion 312 and the second portion 322.

The third sub-casing 33 can limit the relative movement of the first portion 312 and the second portion 322 in the second direction X, so that the first fitting portion 311 remains at the first position of the second fitting portion 321, achieving the fixing between the first sub-casing 31 and the second sub-casing 32.

In some embodiments, in the second direction X, a surface of the first portion 312 facing the second portion 322 is provided with a first recess 312a, and a surface of the second portion 322 facing the first portion 312 is provided with a second recess 322a. A first latch 331 and a second latch 332 are respectively disposed at two ends of the third sub-casing 33 along the second direction X, the first latch 331 is inserted into the first recess 312a, and the second latch 332 is inserted into the second recess 322a.

The third sub-casing 33 is snap-fitted to the first portion 312 and the second portion 322 via the first latch 331 and the second latch 332, respectively, to achieve the fixing of the first sub-casing 31, the second sub-casing 32, and the third sub-casing 33.

In some embodiments, the battery pack further includes a first plate 4, where the first plate 4 is located on a side of the first portion 312 facing the first casing 1 and is connected to the first casing 1, and the first plate 4 covers at least a part of the first opening 11. The first plate 4 is provided with a second opening 41, the first sub-casing 31 includes a third latch 313, the third latch 313 is disposed on an end surface of the first portion 312 facing the first casing 1, and the third latch 313 passes through the second opening 41. The third latch 313 is snap-fitted with the first plate 4 when the first fitting portion 311 is located at the first position, and the third latch 313 is released from the first plate 4 when the first fitting portion 311 is located at the second position.

The first plate 4 is fixed to the first casing 1. For example, the first plate 4 may be fixed to the first casing 1 by a fastener, such as a screw.

The first sub-casing 31 is snap-fitted to the first plate 4 through engagement between the third latch 313 and the second opening 41 to reduce the risk of rotation of the first sub-casing 31 when the first fitting portion 311 is at the first position.

In some embodiments, the first plate 4 is provided with a third opening 42. The battery pack further includes a second component 5, and the second component 5 passes through the third opening 42 to be electrically connected to the battery module 2. A side of the first portion 312 facing the first plate 4 is provided with a third recess 312b, and at least a part of the second component 5 is accommodated in the third recess 312b. The arrangement of the third opening 42 can reduce the risk of interference between the first plate 4 and the second component 5. The third recess 312b can provide an accommodation space for the second component 5 and can provide protection for the second component 5 from the outside. For example, the second component 5 can include a power harness connected to the battery module 2.

When the second component 5 fails, the first sub-casing 31 is opened to maintain the second component 5.

In some embodiments, two third openings 42 are provided, and the two third openings 42 are respectively opposite to the two battery modules 2 in the first direction Z. The second component 5 can pass through the two third openings 42 to electrically connect the two battery modules 2.

In some embodiments, the first sub-casing 31 includes a third portion 314 connected to the first portion 312, and the third portion 314 is located between the first portion 312 and the second portion 322 in the second direction X. The first fitting portion 311 is disposed at the third portion 314.

In some embodiments, a side of the third portion 314 facing the first casing 1 is provided with a first hole 3141, and the first plate 4 is provided with a first protrusion 43 inserted into the first hole 3141. The first protrusion 43 is inserted into the first hole 3141 to limit the movement of the first sub-casing 31 along the second direction X.

In some embodiments, the first hole 3141 includes a first hole portion 3141a and a second hole portion 3141b communicating with each other, and a hole size of the second hole portion 3141b is larger than a hole size of the first hole portion 3141a. The first protrusion 43 is inserted into the first hole portion 3141a when the first fitting portion 311 is located at the first position, and the first protrusion 43 is inserted into the second hole portion 3141b when the first fitting portion 311 is located at the second position.

When the first fitting portion 311 is at the first position, the first protrusion 43 fits with the first hole portion 3141a having a smaller hole size, so that the first protrusion 43 is snap-fitted to the first sub-casing 31. When the first fitting portion 311 is at the second position, the first protrusion 43 is inserted into the second hole portion 3141b. When the first sub-casing 31 is rotated in the opening direction, the second hole portion 3141b having a larger hole size can provide space for the rotation of the first protrusion 43, making it less likely to interfere with the rotation of the first protrusion 43. When the first sub-casing 31 is rotated in the closing direction, the first protrusion 43 is more easily inserted into the second hole portion 3141b having a larger hole size.

In some embodiments, the third portion 314 is provided with a second hole 3142. The battery pack further includes a first component 6, the second casing includes a third sub-casing 33, at least a part of the first component 6 is accommodated in the second hole 3142, and at least a part of the third sub-casing 33 is located between the first portion 312 and the second portion 322 and covers at least a part of the first component 6.

The second hole 3142 provides space for the first component 6, reducing the risk of interference between the first component 6 and the first sub-casing 31. The third sub-casing 33 covers at least a part of the first component 6 to provide protection, reducing the risk of damage to the first component 6 when the battery pack is subjected to external impact.

In some embodiments, the first component 6 includes a display screen. The third sub-casing 33 exposes part of the display screen, which is conducive for the staff to view the working state of the battery pack.

In some embodiments, the second sub-casing 32 includes a second protrusion 323, the second protrusion 323 protrudes out of a surface of the second portion 322 facing the first portion 312 along the second direction X, and the second fitting portion 321 is disposed at the second protrusion 323. The first sub-casing 31 further includes a fourth portion 315, the fourth portion 315 is connected to the first portion 312 and opposite to the second protrusion 323 along a third direction Y, and the third direction Y is perpendicular to the second direction X. The first fitting portion 311 protrudes out of a surface of the fourth portion 315 facing the second protrusion 323 along the third direction Y and is inserted into the second fitting portion 321.

The second fitting portion 321 may be a hole, a slot, a notch, or another structure.

In some embodiments, the second fitting portion 321 includes a third hole 321a. The size of the third hole 321a at the second position along the first direction Z is larger than the size of the third hole 321a at the first position along the first direction Z. The first direction Z is perpendicular to the second direction X and the third direction Y.

The size of the third hole 321a at the first position along the first direction Z is smaller. The first fitting portion 311 can be snap-fitted with the wall of the third hole 321a at the first position of the third hole 321a. The size of the third hole 321a at the second position along the first direction Z is larger, and the first fitting portion 311 can rotate at the second position of the third hole 321a.

In some embodiments, two second protrusions 323 and two fourth portions 315 are provided, the two second protrusions 323 are spaced apart along the third direction Y, and the two fourth portions 315 are located between the two second protrusions 323.

Each of the second protrusions 323 is provided with a third hole 321a, and each of the two fourth portions 315 is provided with a first fitting portion 311. The two first fitting portions 311 are engaged with the two third holes 321a, improving the stability of the connection between the first sub-casing 31 and the second sub-casing 32.

In some embodiments, the second portion 322 covers at least a part of the first opening 11. In some embodiments, in the first direction Z, the second portion 322 is opposite to at least a part of the heat dissipation component 8.

In some embodiments, the battery pack further includes a second plate 7, where the second plate 7 is located on a side of the second portion 322 facing the first casing 1 and is connected to the first casing 1, and the second plate 7 covers at least a part of the first opening 11. The second plate 7 and the second portion 322 are arranged along the first direction Z. The second plate 7 is provided with a fourth opening 71, the second sub-casing 32 includes a fourth latch 324, the fourth latch 324 is disposed on an end surface of the second portion 322 facing the first casing 1, and the fourth latch 324 passes through the fourth opening 71. The fourth latch 324 is snap-fitted with the second plate 7 when the first fitting portion 311 is located at the first position, and the fourth latch 324 is released from the second plate 7 when the first fitting portion 311 is located at the second position.

The second plate 7 is fixed to the first casing 1. For example, the second plate 7 may be fixed to the first casing 1 by a fastener.

The second sub-casing 32 is snap-fitted to the second plate 7 through engagement between the fourth latch 324 and the fourth opening 71 to reduce the risk of rotation of the second sub-casing 32 when the first fitting portion 311 is at the first position.

In some embodiments, at least a part of the heat dissipation component 8 is accommodated in the first casing 1. The second plate 7 is provided with a fifth opening 72, the heat dissipation component 8 is opposite to the fifth opening 72 along the first direction Z, and the second portion 322 covers the fifth opening 72. Driven by the heat dissipation component 8, the gas outside the battery pack can enter the battery pack via the fifth opening 72, or the gas inside the battery pack can be discharged to the outside of the battery pack via the fifth opening 72.

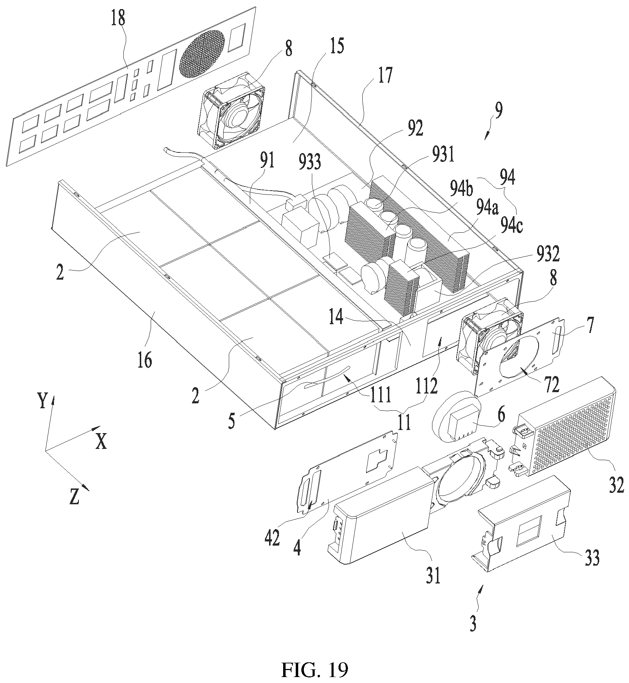

As shown in FIG. 19, in some embodiments, the first casing includes a partition portion 14, and the partition portion 14 separates the first opening 11 into the first region 111 and the second region 112.

The partition portion 14 can support the part of the first casing 1 enclosing the first opening 11, reducing deformation of the first opening 11, thereby enhancing the stability and safety of the battery pack.

## Claims

1. A battery pack, comprising:
a first casing having a first opening;
a battery module accommodated in the first casing; and
a second casing connected to the first casing, wherein the second casing comprises a first sub-casing and a second sub-casing, the first sub-casing is connected to the first casing and covers at least a part of the first opening, the second sub-casing is connected to the first casing, and the first sub-casing and/or the second sub-casing is configured to be openable.

2. The battery pack according to claim 1, wherein the battery module is disposed opposite to the first sub-casing along a first direction;
the battery pack further comprises a control assembly accommodated in the first casing, and the control assembly is spaced apart from the battery module along a second direction perpendicular to the first direction; and
the control assembly is disposed opposite to the second sub-casing along the first direction.

3. The battery pack according to claim 1 or 2, wherein the first opening comprises a first region and a second region, the first sub-casing covers at least a part of the first region, and the second sub-casing covers at least a part of the second region.

4. The battery pack according to claim 3, wherein the first casing comprises a partition portion, and the partition portion separates the first opening into the first region and the second region.

5. The battery pack according to claim 2, wherein the control assembly comprises a circuit board, a control component, and a heat conducting plate; the circuit board comprises a first surface and a second surface opposite to each other along a third direction, and the third direction is perpendicular to the first direction and the second direction; and
the second surface is connected to the first casing, and the control component and the heat conducting plate are disposed on the first surface.

6. The battery pack according to claim 5, wherein the control component comprises a control chip, and along the first direction, the control chip is located between the battery module and the heat conducting plate.

7. The battery pack according to claim 5, wherein viewed along the first direction, the heat conducting plate is higher than the control component in the third direction.

8. The battery pack according to claim 5, further comprising a heat dissipation component disposed on the first casing, the heat dissipation component is opposite to at least a part of the heat conducting plate along the first direction.

9. The battery pack according to claim 8, wherein the control component comprises a capacitor, and the heat dissipation component is opposite to at least a part of the capacitor along the first direction.

10. The battery pack according to claim 9, wherein the heat conducting plate comprises a first heat conducting plate and a second heat conducting plate spaced apart along the second direction; and
viewed along the third direction, the capacitor is located between the first heat conducting plate and the second heat conducting plate in the second direction.

11. The battery pack according to claim 10, wherein the control component comprises a control chip, and viewed along the third direction, the second heat conducting plate is located between the control chip and the capacitor in the second direction.

12. The battery pack according to claim 8, wherein the second sub-casing is opposite to the heat dissipation component along the first direction; and
the second sub-casing is provided with multiple through holes, and at least some of the multiple through holes are opposite to the heat dissipation component along the first direction.

13. The battery pack according to claim 5, wherein viewed along the first direction, the battery module is higher than the heat conducting plate in the third direction.

14. The battery pack according to claim 2, further comprising a protruding wall, wherein the protruding wall is disposed between the battery module and the control assembly.

15. The battery pack according to claim 2, wherein the battery pack further comprises a first component disposed on the first casing, and the control assembly is connected to the first component via a cable.

16. The battery pack according to claim 15, wherein the second casing further comprises a third sub-casing, and the third sub-casing is connected to the first sub-casing and the second sub-casing; and
in the first direction, the third sub-casing covers at least a part of the first component.

17. The battery pack according to claim 1, wherein the first sub-casing is provided with a first fitting portion, the second sub-casing is provided with a second fitting portion, the first fitting portion is configured to be movable from a first position of the second fitting portion to a second position, the first fitting portion is snap-fitted with the second sub-casing at the first position, and the first fitting portion is rotatably connected to the second sub-casing at the second position.

18. The battery pack according to claim 17, wherein the first position and the second position are disposed along a second direction; and
the first sub-casing comprises a first portion, the second sub-casing comprises a second portion, the first portion and the second portion are arranged along the second direction, and the first fitting portion and the second fitting portion are located between the first portion and the second portion in the second direction.

19. The battery pack according to claim 18, wherein the second casing further comprises a third sub-casing, and at least a part of the third sub-casing is located between the first portion and the second portion and abuts against the first portion and the second portion.

20. The battery pack according to claim 19, wherein in the second direction, a surface of the first portion facing the second portion is provided with a first recess, and a surface of the second portion facing the first portion is provided with a second recess; and
a first latch and a second latch are respectively disposed at two ends of the third sub-casing along the second direction, the first latch is inserted into the first recess, and the second latch is inserted into the second recess.

21. The battery pack according to claim 18, further comprising a first plate, the first plate is located on a side of the first portion facing the first casing and is connected to the first casing, and the first plate covers at least a part of the first opening;
the first plate is provided with a second opening, the first sub-casing comprises a third latch, the third latch is disposed on an end surface of the first portion facing the first casing, and the third latch passes through the second opening; and
the third latch is snap-fitted with the first plate when the first fitting portion is located at the first position, and the third latch is released from the first plate when the first fitting portion is located at the second position.

22. The battery pack according to claim 21, wherein the first plate is provided with a third opening, the battery pack further comprises a second component, and the second component passes through the third opening to be electrically connected to the battery module; and
a side of the first portion facing the first plate is provided with a third recess, and at least a part of the second component is accommodated in the third recess.

23. The battery pack according to claim 21, wherein the first sub-casing comprises a third portion connected to the first portion, and the third portion is located between the first portion and the second portion along the second direction; and
the first fitting portion is disposed at the third portion.

24. The battery pack according to claim 23, wherein a side of the third portion facing the first casing is provided with a first hole, and the first plate is provided with a first protrusion inserted into the first hole;
the first hole comprises a first hole portion and a second hole portion communicating with each other, and a hole size of the second hole portion is larger than a hole size of the first hole portion; and
the first protrusion is inserted into the first hole portion when the first fitting portion is located at the first position, and the first protrusion is inserted into the second hole portion when the first fitting portion is located at the second hole portion.

25. The battery pack according to claim 23, wherein the third portion is provided with a second hole; and
the battery pack further comprises a first component, the second casing comprises a third sub-casing, at least a part of the first component is accommodated in the second hole, and at least a part of the third sub-casing is located between the first portion and the second portion and covers at least a part of the first component.

26. The battery pack according to claim 25, wherein the first component comprises a display screen.

27. The battery pack according to claim 18, wherein the second sub-casing comprises a second protrusion, the second protrusion protrudes out of a surface of the second portion facing the first portion along the second direction, and the second fitting portion is disposed at the second protrusion;
the first sub-casing further comprises a fourth portion, the fourth portion is connected to the first portion and opposite to the second protrusion along a third direction, and the third direction is perpendicular to the second direction; and
the first fitting portion protrudes out of a surface of the fourth portion facing the second protrusion along the third direction and is inserted into the second fitting portion.

28. The battery pack according to claim 27, wherein the second fitting portion has a third hole, a size of the third hole at the second position along the third direction is larger than a size of the third hole at the first position along the third direction, and the third direction is perpendicular to the second direction and the third direction.

29. The battery pack according to claim 27, wherein two second protrusions and two fourth portions are provided, the two second protrusions are spaced apart along the third direction, and the two fourth portions are located between the two second protrusions.

30. The battery pack according to claim 18, wherein the second portion covers at least a part of the first opening.

31. The battery pack according to claim 30, further comprising a second plate, the second plate is located on a side of the second portion facing the first casing and is connected to the first casing, and the second plate covers at least a part of the first opening;
the second plate and the second portion are arranged along a third direction;
the second plate is provided with a fourth opening, the second sub-casing comprises a fourth latch, the fourth latch is disposed on an end surface of the second portion facing the first casing, and the fourth latch passes through the fourth opening; and
the fourth latch is snap-fitted with the second plate when the first fitting portion is located at the first position, and the fourth latch is released from the second plate when the first fitting portion is located at the second position.

32. The battery pack according to claim 31, further comprising a heat dissipation component, at least a part of the heat dissipation component is accommodated in the first casing; and
the second plate is provided with a fifth opening, the heat dissipation component is opposite to the fifth opening along the third direction, and the second portion covers the fifth opening.
